Europäisches Patentamt

**European Patent Office**

**Office européen des brevets**

(19)

(11) Publication number: **0 040 822**
A1

(12)

# EUROPEAN PATENT APPLICATION

(21) Application number: **81103909.8**

(22) Date of filing: **21.05.81**

(51) Int. Cl.³: **F 16 H 15/50**

(30) Priority: **23.05.80 CA 352602**

(43) Date of publication of application: **02.12.81**
Bulletin 81/48

(84) Designated Contracting States: **AT BE CH DE FR GB IT LI LU NL SE**

(71) Applicant: **TORQUE BALL INC., 2457 Dunwin Drive, Unit No. 2, Mississauga Ontario L5L 1T1 (CA)**

(72) Inventor: **Schmidt, Warren Herbert Douglas, 6986 Estoril Road, Mississauga Ontario L5N 1N4 (CA)**

(74) Representative: **Uexküll & Stolberg Patentanwälte, Beselerstrasse 4, D-2000 Hamburg 52 (DE)**

(54) **Variable speed drive transmission.**

(57) A free ball, variable speed, traction drive or transmission is disclosed having a pair of inner, annular races (12, 14) and a pair of outer, annular races (16, 18) all of the races being concentric about a central axis (22) of the transmission. The races are spaced apart to define an annular channel therebetween, and a plurality of rigid balls (34) are located in the annular channel, the balls being engaged by the races. One of the races (14) is a non-rotatable housing race around which the balls (34) are rolled by engagement with a rotating input race. Input rotation of the input race is transmitted through the balls (34) to drive a rotating output race. The input to output ratio of rotation is determined by the circumferential location of the points of contact of the races (12, 14, 16, 18) on the balls (34) and the axes of rotation of the balls, which in turn are varied by adjusting the axial position of the concentric races (12, 14, 16, 18).

- 1 -

This invention relates to variable speed drives or transmissions, and in particular to infinitely variable traction drives.

Traction drives have been used in the past for a considerable length of time, and there have been many different types of drives employing various structural elements such as balls, rollers, circular plates, cones, etc. For convenience, the prior art devices can be divided into two categories. The first category includes devices wherein the operative members, such as balls or rollers, are pinned or grooved so that the disposition of these members may be manipulated by external control means connected to the operative members. The second category includes devices wherein the operative members, such as balls, are freely rotatable and the disposition of the operative members is controlled or manipulated solely by the interaction of adjacent members in rolling contact with the operative members.

The present invention relates to the second category of traction drives, which have operative members in the form of freely rotatable balls. Examples of traction drives in this category are shown in United States Patent No. 3,237,468 issued to H. Schottler on March 1, 1966, United States Patent No. 3,248,960 issued to H. Schottler on May 3, 1966, and United States Patent No. 3,299,726 issued to T.R. Stockton on January 24, 1967. A difficulty with these prior art structures, however, is that they are very complex in that they require spiders or carriers or cages to maintain the relative positions of the balls and generate the relative movement between the input and output races. This makes the prior art

- 2 -

devices expensive to produce and subject to undesirable frictional wear problems.

In the present invention, the balls are truly freely rotatable, the balls being manipulated solely by concentric annular races engaging same. One of the races engaging the balls is a non-rotatable housing race which produces relative motion between an input race and an output race. Axial adjustment of the position of the races varies the input to output ratio of rotation of the traction drive.

According to the invention, there is provided a variable speed traction drive transmission comprising an annular first race defining a central axis. A double race including second and third annular races is concentrically located about the central axis and means are provided for coupling the second and third races together for relative axial movement therebetween, and for preventing relative rotational movement therebetween. An annular fourth race is concentrically located about the central axis. Support means is provided for retaining the races in relative axially movable concentric disposition. The first, second, third and fourth races are dimensioned and spaced apart to define an annular channel therebetween. A plurality of freely rotatable rigid balls are circumferentially arranged in the channel for rolling contact with the races. Means is provided for biasing the races axially inwardly to engage and retain the balls in the channel. One of the first, double and fourth races is attached to the support means to form a non-rotatable housing race. One other of the first, double and fourth races is rotatably supported by the support means and adapted to be

- 3 -

rotatably driven to form an input race to rotate the balls around the housing race. The remaining one of the first, double and fourth races is rotatably supported by the support means to be driven by the balls to form an output race. Also, means is provided for producing relative axial movement between the second and third races, whereby the axis of rotation of the balls is shifted to vary the ratio of rotation of the input race relative to the output race.

A preferred embodiment of the invention will now be described, by way of example, with reference to the accompanying drawings, in which:

Figure 1 is an elevational view, partly in section of one embodiment of a variable speed drive according to the present invention;

Figure 2 is a diagrammatic perspective view of the race portion of the embodiment shown in Figure 1 illustrating the principle of operation;

Figures 3, 4 and 5 are schematic vertical sectional views of the upper portion of the embodiment shown in Figure 1, illustrating a shifting of the axes of rotation of the balls;

Figures 6 and 7 are schematic vertical sectional views similar to those of Figures 3 to 5, but showing another embodiment of the present invention and illustrating the shifting of the axes of rotation of the balls of this embodiment;

Figure 8 is a schematic vertical sectional view similar to Figures 3 to 7, but showing yet another embodiment of the present invention; and

Figure 9 is a schematic vertical sectional view similar to Figures 3 to 8, but showing still another embodiment of the present invention.

- 4 -

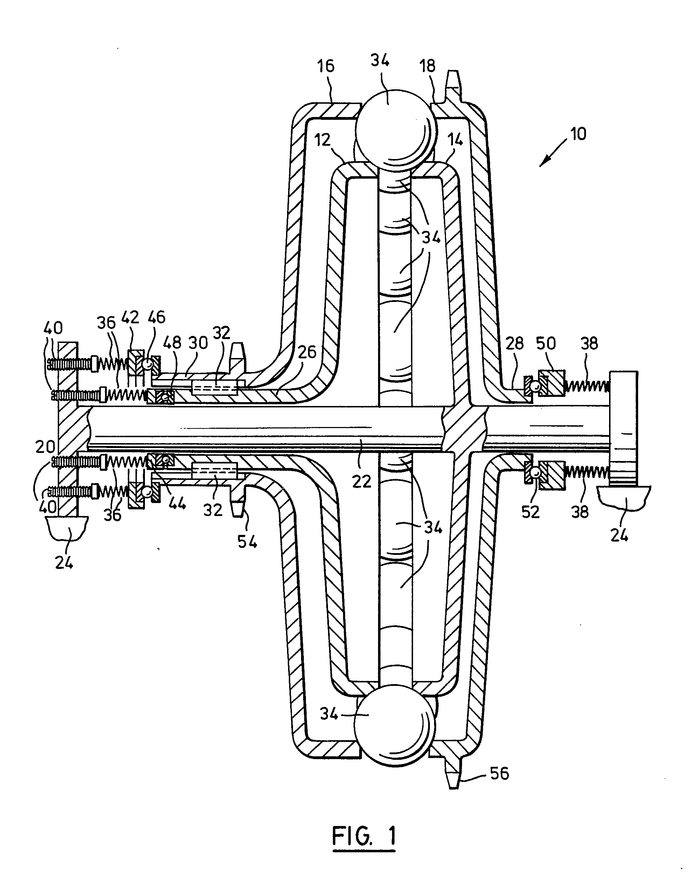

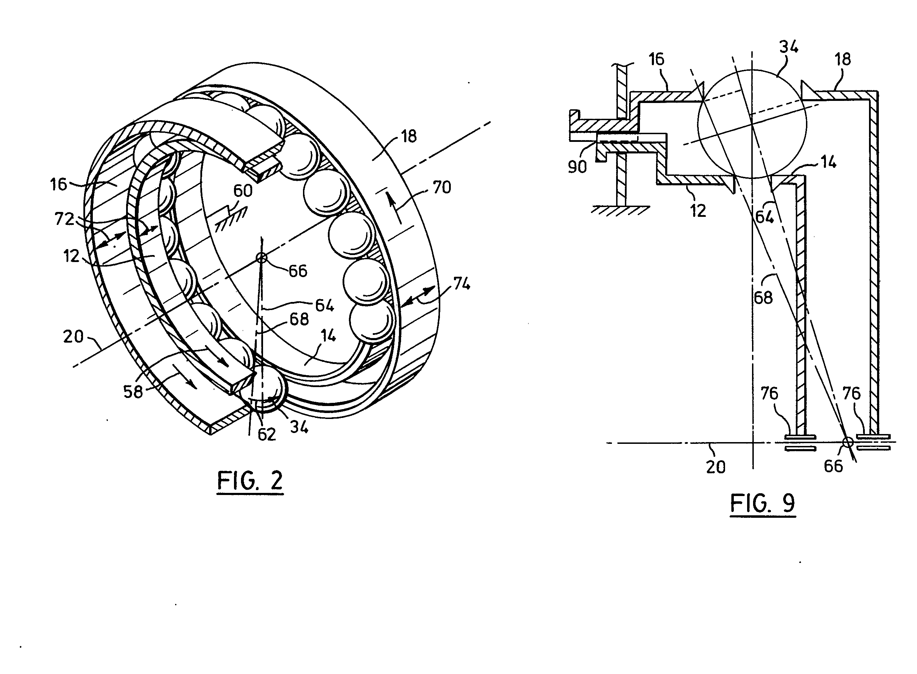

Referring to Figures 1 and 2, a preferred embodiment of a variable speed traction drive or transmission is generally indicated by reference numeral 10. Traction drive 10 includes a pair of annular, concentric inner races 12, 14, and a pair of annular, concentric outer races 16, 18. All of the races 12 to 18 are concentrically located with respect to a central axis 20 of traction drive 10. A stationary central axial shaft 22 is rigidly connected to a stationary member 24 which may be part of a frame or base structure supporting traction drive 10. Central axial shaft 22 supports races 12 to 18 and retains the races in relative axially movable concentric disposition, as described further below.

Inner race 14 is attached to central axial shaft 22, and is thus a stationary or housing race which is non-rotatable. Inner race 12 includes a central axial tubular portion 26 slidably and concentrically mounted on central axial shaft 22, so that inner race 12 is rotatably and slidably mounted on central shaft 22. Outer race 18 also includes a central axial tubular portion 28 for rotatably and slidably mounting outer race 18 on central axial shaft 22. Outer race 16 also includes a central axial tubular portion 30 which is concentrically and slidably mounted on tubular portion 26. However, keyways and keys 32 are provided between tubular portions 26, 30 to prevent relative rotational movement and permit relative axial movement between races 12 and 16. Races 12, 16 thus may rotate together around central axial shaft 22. Races 12, 16 are referred to collectively as a double race.

- 5 -

Races 12 to 18 are dimensioned and spaced apart to form an annular channel therebetween. A plurality of freely rotatable rigid balls 34 are circumferentially arranged in this annular channel for rolling contact with races 12 to 18.

Races 12 to 18 are urged or biased into engagement with balls 34 by springs 36, 38. Springs 36 are located between adjusting screws 40 and annular concentric plates 42, 44. Ball bearings 46, 48 are located between respective concentric plates 42, 44 and the adjacent ends of respective tubular portions 30, 26 of races 16, 12. Ball bearings 46, 48 permit races 16, 12 to rotate relative to the stationary springs 36 and adjusting screws 40, and thus relative to central axial shaft 22. Springs 36 bias races 12, 16 axially inwardly to engage balls 34. Adjusting screws 40, when rotated, produce relative axial movement between races 12, 16, the purpose of which relative axial movement will be described further below.

Springs 38 bear against a similar annular concentric plate 50, and a ball bearing 52 is located between annular plate 50 and the adjacent tubular portion 28 of race 18 to permit race 18 to rotate relative to the stationary plate 50 and springs 38 and thus central axial shaft 22. It will be appreciated that springs 38 bias or urge outer race 18 axially inwardly to engage balls 34, and that balls 34 are retained in position by the inward spring bias acting on races 12, 16 and 18. For this purpose, the spring forces of springs 36, 38 are balanced.

Outer races 16 is formed with an integral chain sprocket 54, and outer race 18 is formed with an

0040822

- 6 -

integral chain sprocket 56. Sprockets 54, 56 are provided for coupling traction drive 10 to a source of input torque or for providing a coupling for taking off the output torque produced by traction drive 10. Sprocket 54 could be the input or driven sprocket and sprocket 56 could be the output or drive sprocket, or vice versa.

The operation of traction drive 10 is illustrated in Figure 2, which corresponds with the embodiment shown in Figure 1, except that only one ball 34 is shown and only portions of races 12 to 18 are shown for clarity. In Figure 2, races 12 and 16 form the double race and rotate together or with the same angular velocity, as illustrated by arrows 58. Race 14 is the non-rotatable or housing race and remains stationary as indicated by the ground symbol 60. When the double race 12, 16 rotates in the direction of arrows 58, balls 34 will roll around housing race 14, the balls rotating in the direction of arrow 62. Ball 34 rotates about a ball axis 64 which passes through the centre of the ball and through the traction drive central axis 20. The point where the ball axis 64 crosses central axis 20, referred to as the crossing point 66, is determined by a line 68 passing through the points of contact of races 12, 16 on ball 34. Line 68 also passes through the traction drive central axis 20 at crossing point 66. Each ball 34 will have its own axis of rotation 64, and the relationship between the inclination of the ball axes of rotation and the ratio of rotation of the traction drive races will be discussed further below.

- 7 -

As shown in Figure 2, when double race 12, 16 rotates in the direction of arrows 58, the rotating balls 34 will engage race 18 and cause race 18 to rotate in the direction of arrow 70. Race 18 may also rotate in a direction opposite to arrow 70 depending upon the angle of disposition of the ball axis 64 as described further below. The angle of inclination of ball axis 64 is varied by producing relative axial movement between races 12, 16, as indicated by arrows 72. When races 12, 16 are shifted axially as indicated by arrows 72, race 18 will also shift axially as indicated by arrows 74, so that all four races 12, 14, 16 and 18 are in contact with balls 34 at all times.

In the embodiment shown in Figures 1 and 2, double race 12, 16 could be an input race, in which case it would be driven or rotated by the application of external torsional forces applied to this double race. If the double race 12, 16 is the input race, race 18 would be driven by balls 34 to form an output race for applying torque or torsional forces to or for rotating an external body.

It will be appreciated that race 18 could be the input race, in which case the double race 12, 16 would be the output race. Also, any one of the races 18, 14 and double race 12, 16 could be held stationary to form the housing race. In this case, any one of the other races could be driven to form the input race, and the remaining one of the races could form the output race. As will be apparent from the following description, it is also possible to have both inner races 12, 14 form the double race, or both outer races 16, 18 form the double race. As a result, there are 18 possible configurations of traction drive 10, depending upon which race is chosen as the double race, which race is chosen as the housing race, and which races are chosen as the input and output races.

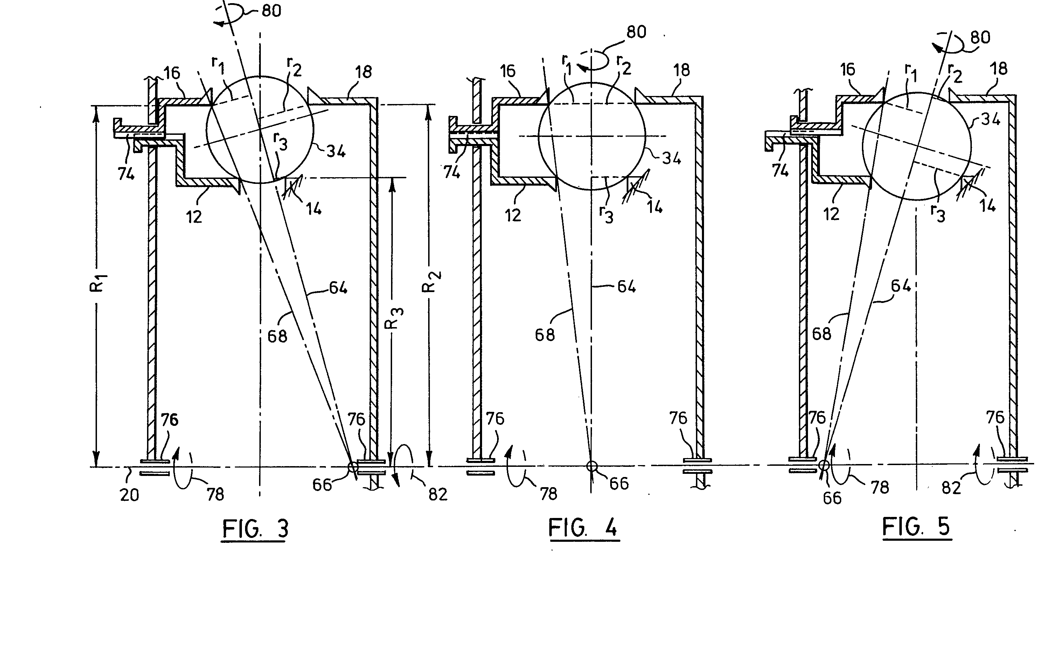

Referring next to Figures 3 to 5, the adjustment of the ratio of rotation between the input and output races of traction drive 10 will now be described. Figures 3 to 5 are schematic representations of the embodiment of the invention shown in Figure 1, wherein races 12 and 16 form the double race. Therefore, races 12 and 16 rotate together and are axially movable relative to each other. Races 12, 16 are coupled together by interlocking keyways 74, which are equivalent to the keys 32 shown in Figure 1. Also in Figures 3 to 5, the traction drive central axial shaft 22 is not shown but is represented by the centre axis 20. The double race 12, 16 and race 18 are illustrated as having central axial sleeves 76, which permit the races to rotate about central axis 20 (or central axial shaft 22 not shown), and also to permit the races to slide or move axially along central axis 20. Race 14, which is the housing race in Figures 3 to 5, is shown in a simplified manner to illustrate that this race is non-rotatable or fixed.

Referring in particular to Figure 3, with the double race 12, 16 adjusted as shown, when the double race rotates in the direction of arrow 78, balls 34 will rotate in the direction of arrow 80. Balls 34 will roll around housing race 14, rotating about ball axis 64. As mentioned above, ball axis 64 crosses central axis 20 at a crossing point 66, which is also the point of intersection of line 68 passing

- 9 -

through the points of contact of races 12, 16 on balls 34. The rotation of balls 34 in the direction of arrow 80 causes race 18 to rotate in the direction of arrow 82.

The ratio of rotation between double race 12, 16 and race 18 may be expressed by reference to the various radii shown in Figure 3. The radial distance from central axis 20 to the point of contact of race 16 on ball 34 (referred to as a contact radius) is called $R_1$. The radial distance from central axis 20 to the point of contact of race 18 on ball 34 is called contact radius $R_2$. The radial distance from central axis 20 to the point of contact of the housing race 14 on ball 34 is called contact radius $R_3$. The perpendicular distance from the point of contact of race 16 on ball 34 to ball axis 64 (referred to as a ball radius) is called $r_1$. The perpendicular distance from the point of contact of race 18 on ball 34 to the ball axis 64 is referred to as ball radius $r_2$. Also, the perpendicular distance from the point of contact of housing race 14 to ball axis 64 is referred to as ball radius $r_3$. The ratio of rotation between the double race 12, 16 and race 18 may be expressed as follows:

$$\text{Ratio of rotation} = \frac{\dfrac{r_2}{R_2} \quad \dfrac{r_3}{R_3}}{\dfrac{r_1}{R_1} \quad \dfrac{r_3}{R_3}}$$

Using Figure 3 as an example, if double race 12, 16 is the input race, race 18 is the output race and race 14 is the housing race, this equation states that the ratio of rotation is: the ratio of the output ball

- 10 -

radius $r_{output}$ ($r_2$) to the output contact radius $R_{output}$ ($R_2$) minus the ratio of the housing ball radius $r_{housing}$ ($r_3$) to the housing contact radius $R_{housing}$ ($R_3$); divided by: the ratio of the input ball radius $r_{input}$ ($r_1$) to the input contact radius $R_{input}$ ($R_1$) minus the ratio of the housing ball radius $r_{housing}$ ($r_3$) to the housing contact radius $R_{housing}$ ($R_3$). Algebraically this may be expressed as follows:

$$\text{Ratio of rotation} = \frac{\dfrac{r_{output}}{R_{output}} - \dfrac{r_{housing}}{R_{housing}}}{\dfrac{r_{input}}{R_{input}} - \dfrac{r_{housing}}{R_{housing}}}$$

Referring next to Figure 4, when races 12, 16 are shifted axially, so that race 16 moves to the right and race 12 moves to the left as seen in Figure 4, it will be noted that crossing point 66 also shifts to the left. Also, the length of $r_3$ increases and the length of $r_2$ decreases. If the speed of rotation of double race 12, 16 is held constant, the speed of rotation of race 18 decreases as the races 12, 16 are shifted axially from the position in Figure 3 to the position shown in Figure 4. In the configuration shown in Figure 4, the speed of rotation of race 18 is zero.

Referring next to Figures 4 and 5, it will be seen that in Figure 5 race 12 has been shifted axially further to the left and race 16 has been shifted axially further to the right, so that crossing point 66 has been shifted further to the left. Radius $r_3$ has increased in length and radius $r_2$ has

- 11 -

decreased in length, with the result that if double race 12, 16 is rotated in the direction of arrow 78, race 18 will rotate in the direction of arrow 82, which is the reverse direction compared to that of Figure 3.

On comparing Figures 3, 4 and 5, if the double race 12, 16 is an input race, and race 18 is an output race, it will be apparent that as races 12, 16 shift axially, the speed of output race 18 will decrease to zero and then increase, and the direction of rotation will reverse as the traction drive goes from the configuration shown in Figure 3 through the configuration shown in Figure 4 to the configuration shown in Figure 5.

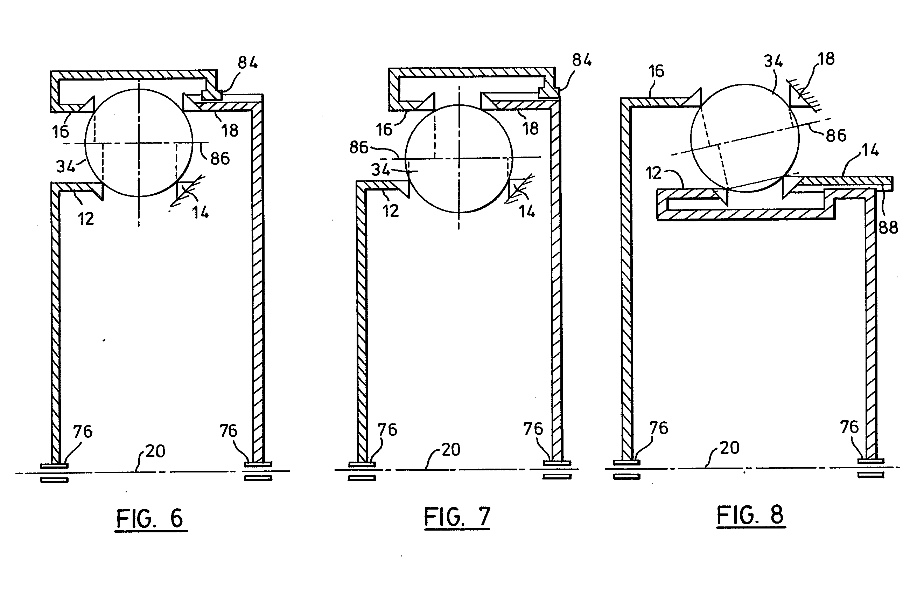

Referring next to Figures 6 and 7, an alternative embodiment of the invention is illustrated wherein the double race is formed by the two outer races 16, 18. Races 16, 18 are coupled together for relative axial movement by keyways 84. Keyways 84 also prevent relative rotational movement between races 16, 18. Race 14 is again a stationary housing race. In this embodiment, either the double race 16, 18 is the input race making race 12 the output race, or race 12 is the input race making double race 16, 18 the output race. The axis of rotation of balls 34 is indicated by centre line 86, which in this embodiment is parallel to central axis 20. Otherwise, the components and operation of the embodiment shown in Figures 6 and 7 are similar to the embodiment shown in Figures 3 to 5, and like reference numerals have been used to indicate the similar components.

Referring next to Figure 8, yet another embodiment of the invention is shown wherein the

- 12 -

double races are formed by the two inner races 12, 14. Again, races 12, 14 are keyed together by keyways 88 to permit relative axial movement and prevent relative rotational movement between races 12, 14. In this embodiment, race 18 is the stationary or housing race. Also, the double race 12, 14 could be the input race with race 16 as the output race, or alternatively, race 16 could be the input race and the double race 12, 14 could be the output race. Again, like reference numerals have been used in this embodiment to indicate components similar to those of the embodiments shown in Figures 3 to 7. The axis of rotation of balls 34 is indicated in this embodiment by ball axis centre line 86.

Referring next to Figure 9, yet another embodiment of the invention is shown. In this embodiment, the double race is formed by inner race 12 and outer race 16. Again, races 12, 16 are coupled together by keyways 90 to permit relative axial movement and prevent relative rotational movement. In fact, double race 12, 16 is the stationary or housing race in this embodiment. If race 18 is the input race, race 14 would be the output race, and similarly, if race 14 is the input race, race 18 would be the output race. Otherwise, like reference numerals have been used in this embodiment to indicate components similar to those of the previously described embodiments.

Having described preferred embodiments of the invention, it will be appreciated that various modifications may be made to the structures described. For example, the embodiment shown in Figure 1 is only a simple diagrammatic representation.

- 13 -

Other devices than springs and concentric plates could be used to bias the races into engagement with the balls. The adjusting screws used to produce relative movement between the two races of the double race could be replaced by other structures, such as levers, cams or threaded connectors between the races. The chain sprockets 54, 56 used to couple the traction drive to the source and application of torsional forces could be replaced by other structures for inputing and outputing torque. In fact, the races themselves could be other shapes or configurations and could include drive and driven shafts as desired. Other coupling means than keyways could be used to permit axial adjustment and prevent relative rotation between the individual races of the double race. Also, the number of balls can be varied as desired.

Although the housing races described above are shown to be stationary, these races could also be axially movable as long as they are non-rotatable. It will be appreciated that other support structures could be used for retaining the races in relative axially slidable concentric disposition. Limiting means could be provided for controlling the amount of axial shift of the races of the double race. This may be preferable where, for example, it is desirable that the traction drive not be permitted to have a reverse mode of operation. Although the balls shown in Figure 1 have no guides or restraining means other than the races themselves, a spacing cage could be used if desired to space the balls apart circumferentially.

In the embodiments described above, both inner races and both outer races are shown to have generally the same diameter, except for the embodiment

- 14 -

shown in Figure 8. The diameters of these races could be all different. Different diameters of the races would produce different rotational axes of the balls.

Finally, it will be appreciated that the drawings do not illustrate all of the permutations and combinations of inner, outer and double races when used as either input, output or housing races. As mentioned above, there are eighteen configurations possible, and the structural shape of the races will in part be governed by the configuration desired.

It will be appreciated from the above description that the present invention provides a relatively simple traction drive, and yet there are many modes of configurations of operation to facilitate the application of the traction drive to many different types of power transmissions.

CLAIMS

0040822

1. A variable speed traction drive transmission comprising:

(a) an annular first race defining a central axis;

(b) a double race including second and third annular races concentrically located about said central axis and means coupling said second and third races together for relative axial movement therebetween, and for preventing relative rotational movement therebetween;

(c) an annular fourth race concentrically located about said central axis;

(d) support means for retaining said races in relative axially movable concentric disposition;

(e) said first, second, third and fourth races being dimensioned and spaced apart to define an annular channel therebetween;

(f) a plurality of freely rotatable rigid balls circumferentially arranged in said channel for rolling contact with said races;

(g) means for biasing the races axially inwardly to engage and retain the balls in said channel;

(h) one of said first, double and fourth races being attached to said support means to form a non-rotatable housing race, one other of said first, double and fourth races being rotatably supported by said support means and adapted to be rotatably driven to form an input race to rotate said balls around the housing race, and the remaining one of said first, double and fourth races being rotatably supported by said support means to be driven by said balls to form an output race; and

(i) means for producing relative axial movement between said second and third races, whereby the axis of rotation of the balls is shifted to vary the ratio of rotation of said input race relative to said output race.

2. A variable speed traction drive transmission as claimed in claim 1 wherein said first, second, third and fourth races are in the form of a pair of inner races and a pair of concentric outer races, said balls being located between and retained by said inner and outer races.

3. A variable speed traction drive transmission as claimed in claim 2 wherein said support means includes a central axial shaft, said housing race being attached to said axial shaft and said input and output races being rotatably and slidably mounted on said axial shaft.

4. A variable speed traction drive transmission as claimed in claim 2 or 3 wherein the double race is the input race, the first race is the housing race, and the fourth race is the output race.

5. A variable speed traction drive transmission as claimed in claim 2 or 3 wherein the double race is the input race, the fourth race is the housing race, and the first race is the output race.

6. A variable speed traction drive transmission as claimed in claim 2 or 3 wherein the first race is the input race, the fourth race is the housing race, and the double race is the output race.

7. A variable speed traction drive transmission as claimed in claim 2 or 3 wherein the first race is the input race, the double race is the housing race, and the fourth race is the output race.

8. A variable speed traction drive transmission as claimed in claim 2 or 3 wherein the fourth race is the input race, the first race is the housing race and the double race is the output race.

9. A variable speed traction drive transmission as claimed in claim 2 or 3 wherein the fourth race is the input race, the double race is the housing race and the first race is the output race.

10. A variable speed traction drive transmission as claimed in any one of claim 4 to 9 wherein the double race includes one inner race and the adjacent outer race, the other outer race is said first race and the other inner race is said fourth race.

11. A variable speed traction drive transmission as claimed in any one of claims 4 to 9 wherein the double race includes both inner races, one outer race being said first race, and the other outer race being said fourth race.

12. A variable speed traction drive transmission as claimed in any one of claims 4 to 9 wherein the double race includes both outer races, one inner race being said first race, and the other inner race being said fourth race.

13. A variable speed traction drive transmission as claimed in any one of claims 2 to 12 wherein said pair of inner races are of equal diameter.

0040822

14. A variable speed traction drive transmission as claimed in any one of claims 2 to 12 wherein said pair of outer races are of equal diameter.

FIG. 1

FIG. 2

FIG. 9

FIG. 3          FIG. 4          FIG. 5

0040822

3/4

FIG. 6

FIG. 7

FIG. 8

0040822

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | F 16 H 15/50 |
| X | FR - A - 992 167 (ACLOQUE) <br><br> * Page 1, right-hand column; page 2, left-hand column; figure 3 * <br> --- | 1,2,4, 5,6,8, 11,13, 14 | |
| X | FR - A - 2 044 951 (TARDIVAT) <br><br> * The whole document * <br> --- | 1,2,4- 6,8,11, 13,14 | |
| X | FR - A - 2 238 095 (NEUWEG) <br><br> * The whole document * <br> --- | 1,2,4- 6,8,11, 13,14 | TECHNICAL FIELDS SEARCHED (Int. Cl.³) |
| X | FR - A - 2 144 401 (LSB) <br><br> * The whole document * <br> --- | 1,2,4- 6,8,11, 13,14 | F 16 H 15/00 |
| D | US - A - 3 237 468 (SCHOTTLER) | 1 | |
| D | US - A - 3 248 960 (SCHOTTLER) | 1 | |
| D | US - A - 3 299 726 (STOCKTON) | 1 | |
| | ---------- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search The Hague | Date of completion of the search 13.08.1981 | Examiner FLORES |
|---|---|---|

EPO Form 1503.1  06.78